Europäisches Patentamt

European Patent Office

Office européen des brevets

(19)

(11) Publication number: **0 071 587**
**B1**

(12) # EUROPEAN PATENT SPECIFICATION

(45) Date of publication of patent specification: **02.04.86**

(21) Application number: **82830215.8**

(22) Date of filing: **28.07.82**

(51) Int. Cl.⁴: **F 16 J 15/32, C 08 J 7/12** //
(C08J7/12, C08L21:00)

(54) Chemical bath process for the treatment of sealing rings provided with a lip.

(30) Priority: **31.07.81 IT 2330481**

(43) Date of publication of application:
**09.02.83 Bulletin 83/06**

(45) Publication of the grant of the patent:
**02.04.86 Bulletin 86/14**

(84) Designated Contracting States:
**BE CH DE FR GB LI NL**

(56) References cited:
FR-A-1 508 575
FR-A-2 465 934
GB-A- 647 732
GB-A-1 118 079
GB-A-1 444 080
GB-A-1 485 618
GB-A-2 077 882

(73) Proprietor: **INTERMARP (ITALIA) S.p.A.**
**Via Po, 10**
**Trecate (Novara) (IT)**

(72) Inventor: **Bassi, Angelo Carlo**
**Via Ronchi, 34**
**Milano (IT)**

(74) Representative: **Zorzoli, Franco**
**c/o BUGNION S.p.A. Via Carlo Farini 81**
**I-20159 Milan (IT)**

Courier Press, Leamington Spa, England.

# Description

The present invention relates to a chemical bath process for the treatment of sealing rings provided with a lip, and more particularly it relates to the chemical treatment to which said ring must be subjected so that it is in a position to perform its functions to the best and has a long life of service.

It is known that by the definition "sealing ring provided with a lip" it is meant a particular type of seal mounted on a rotary shaft, which projects from the casing of a machine, the purpose of which is to protect the members connected to said shaft and placed inside the casing (bearings, bushings, etc.) from dust and other impurities.

According to the known art (for example US 3 713 659), said lip-providing sealing ring is made of natural or synthetic elastomeric material; it comprises a cylindrical or otherwise shaped body part and a lip part in the shape of a truncated cone which are coaxial and crossed by a tubular cavity in which the rotary shaft of the machine is disposed. Said lip part in the shape of a truncated cone is joined to one of the bases of said cylindrical body part by means of its small base; the generating line of said lip part in the shape of a truncated cone forms an angle of a variable width with the axis of said tubular cavity, owing to the possibility of said elastomeric material to become deformed.

Furthermore, the diameter of said tubular cavity is such that said lip-provided sealing ring can be forced, always due to the possibility of deformation of the elastomeric material, on the rotary shaft, becoming consequently integral thereto.

When the shaft is at rest, the free end of said lip part in the shape of a truncated cone is in contact with a fixed surface (generally made of metal) provided with a wide opening through which said rotary shaft passes; said contact gives the inner parts of said machine the necessary protection against impurities. When the shaft rotates, and therefore also the lip-provided sealing ring rotates as it is integral thereto, the free end of said lip part in the shape of a truncated cone slides against said fixed surface till the centrifugal force exerted on said lip part in the shape of a truncated cone reaches a certain value, which causes said end to disjoin from the same surface.

In other words, the rotation of the lip-provided sealing ring gives rise to a centrifugal force which tends to vary the angle that the generating line of the lip part in the shape of a truncated cone forms with the tubular cavity and therefore, it finally causes the free end of said lip part in the shape of a truncated cone to disjoin from the fixed surface.

However, this disjunction does not occur immediately, but only when the rotational speed reaches a rather high value; of course, this disjunction also depends upon the fact that the lip-provided sealing ring is subject to deformation, owing to the elastomeric material of which it is made. In fact it can be easily understood that said disjunction is promoted when the possibility of deformation is high, but at the same time the members placed inside the machine do not have the necessary protection, owing to the fact that said lip part in the shape of a truncated cone can be easily subjected to deformation.

In any case however, at the starting step of the shaft and till the time at which the shaft reaches said value of centrifugal force, the free end of said lip part in the shape of a truncated cone slides against said fixed surface. This sliding is the main drawback as it causes the lip-provided sealing ring to wear and to damage. All known lip-provided sealing rings have the disadvantage of a quick wear and tear of the free end of said lip part in the shape of a truncated cone and therefore the whole lip-provided sealing ring needs to be replaced often. Furthermore, owing to the high value of said friction, a high power is required by the engine, above all during the starting step.

Said too quick deterioration of lip-provided sealing rings in practice involves technical problems (bad protection, necessity of frequent maintenance, etc.) as well as economical problems (cost of the rings, frequent stoppage of the service, etc.).

The aim of the present invention is to obviate the drawbacks of the lip-provided sealing rings of the known art, and therefore to considerably reduce the friction which occurs both during the starting step of rotation of the shaft, and during the step of slow running when the rotation is carried out within reduced values and the lip is kept in contact with the fixed surface.

Chemical processes for reducing the coefficient of friction of natural or synthetic rubber seals are known in the prior art; in particular, two halogenation processes described in GB 1118079 and GB 2077882A, are known.

In the first case the chemical process comprises the treatment of the rubber seals with phosphoris pentafluoride or boron trichloride. The treatment is to be carried out with gaseous products, under substantially anhydrous conditions and at a particular value of temperature. As it will be clearly seen, the process described in the present invention is, at least under the same final result, much easier to be carried out.

In the second case the chemical process consists in an halogenation treatment of the rubber seals with an aqueous solution of chlorine and bromine. As it is clearly said in the text, this treatment reduces the coefficient of friction of the seals but, in the same time, it produces an hardening of the seals themselves. Therefore, this process is inapplicable for the seals described in the present invention. In fact, these seals have a lip which must undergo an easy deformation when the rotation of the shaft starts.

It is therefore an object of the present invention to provide a chemical bath process for the treatment of sealing rings made of natural or synthetic elastomeric material, the rings being adapted to be mounted on a rotary shaft and comprising and annular body part for receiving the shaft and lip part in the shape of a truncated cone for cooperating with a fixed sealing surface, the smaller end of said lip part being joined to the body part said body part and said part being coaxial, the cone angle of said lip part varying under the action of centrifugal force according to the speed of the rotary shaft, said process comprising, the succession, the steps of halogenation and neutralization, characterized in that said halogenation step is carried out in a water bath containing 0,5 to 10 parts by weight of hypochlorite, 0,5 to 2 parts by weight of hydrochloric acid and 0,5 to 1 part by weight of a surface-active agent, and said neutralization step is carried out in a water bath containing 2,5 to 10 parts by weight of ammonia.

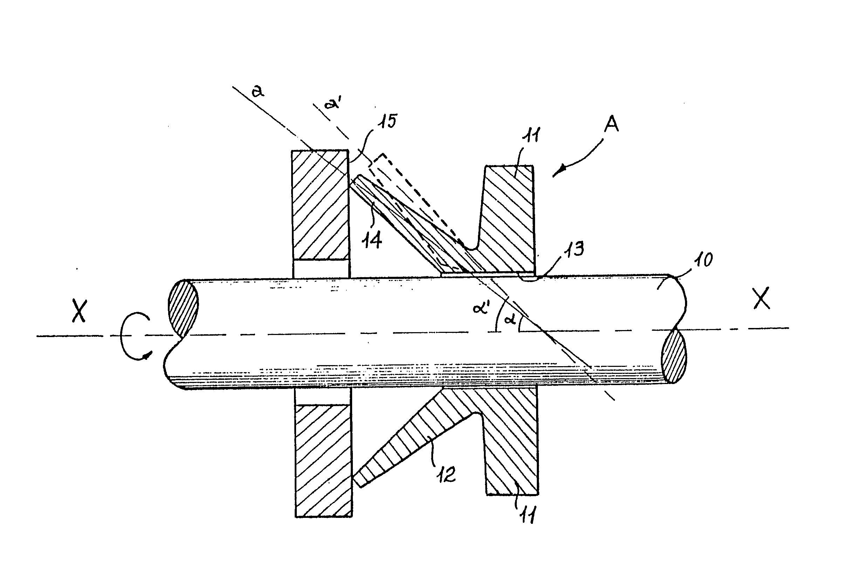

The present invention will best be understood from the following description taken in connection with the accompanying drawing in which the only figure represents a cross-sectional diagrammatic view of said lip-provided sealing ring according to the invention.

Referring to said figure, the lip-provided sealing ring A appears integrally mounted on shaft 10 which rotates about the axis X—X.

Said lip-provided sealing ring A comprises a generally cylindrical body part 11, which however can be also differently shaped, and a lip part in the shape of a truncated cone 12, the latter being joined by its small base to one of the bases of the former.

The two parts 11 and 12 are coaxial and crossed by a tubular cavity 13 which in turn is coaxial to the shaft. The generating line $a$ of said lip part in the shape of a truncated cone (for the sake of simplicity said generating line is drawn in the figure in the middle portion of the section showing the thickness of the lip part in the shape of a truncated cone) forms an angle $a$ with the axis X—X. Said angle $a$ has a variable width, by virtue of the degree of deformation of the elastomeric material composing said lip-provided sealing ring.

When the shaft 10 is at rest or when it is rotating at a very low speed, the free end 14 of said lip part in the shape of a truncated cone urges against the fixed surface 15. However, when the shaft is rotating, owing to the centrifugal force exerted on said lip part in the shape of a truncated cone, the generating line $a$ gradually reaches the position shown as $a'$ in the figure, forming the angle $a'$ with the axis X—X, and gradually causing the disjunction of the free end 14 of said lip part in the shape of a truncated cone from said fixed surface 15.

As already said, the gradual reduction of pressure and the possible disjunction of said free end from the fixed surface does not only depend upon the rotation speed of the shaft, but also upon the facility of deformation of the elastomeric material of which said lip-provided sealing ring is made.

Particularly, it has been found that said material has a dynamic behavior which is particularly satisfactory for this purpose when the ratio between the density of said material (indicated in g/cm$^3$) and the stress (indicated as CA01 according to UNI 6065 specification) is equal to or higher than 4.5.

As to the possibility of reducing the friction which occurs between the free end of said lip part in the shape of a truncated cone and said fixed surface and which is stronger when the rotation starts but gradually decreases till it reaches the condition of disjunction of the two parts, it has been found that said friction can be considerably reduced if said lip-provided sealing ring is at least subjected, in succession, before its assembling on the shaft, to the steps of halogenation and neutralization; advantageously said steps can be preceded and followed by the further steps of a first and a second washing in water.

It has been found that the best results can be achieved when said halogenation step is carried out in a water bath containing 0,5 to 10 parts by weight of hypochlorite, 0,5 to 2 parts by weight of hydrochloric acid and 0,5 to 1 part by weight of a surface-active agent, and said neutralization step is carried out in a water bath containing 2,5 to 10 parts by weight of ammonia.

Both the steps are carried out at room temperature and for a period varying from 2 to 10 minutes.

According to the object of the present invention it is understood that said treatment can be accomplished either on the whole lip-provided sealing ring or on the free end only of said lip part in the shape of a truncated cone, the latter procedure being particularly advantageous when said lip-provided sealing ring has middle or big sizes (for example the diameter of the cylindrical body part is longer than 6 cm).

The advantages of the present invention reside in the fact that the chemical treatment with halogen elements involves an important reduction of the friction coefficient of the elastomeric material without an hardening of the material itself; as a result, the free end of the lip part in the shape of a truncated cone is less worn during the starting step, that is until the disjunction of said free end from said fixed surface takes place.

Furthermore, it has to be noted that a further advantage is given by the fact that the engine requires less power, due to the reduced friction. The purpose of the subsequent neutralization step is to stop the aggressive action of the halogen.

**Claims**

1. A chemical bath process for the treatment of sealing rings (A) made of natural or synthetic elastomeric material, the rings being adapted to be mounted on a rotary shaft and comprising an annular body part (11) for receiving the shaft and a lip part (12) in the shape of a truncated cone for cooperating with a fixed sealing surface (15), the smaller end of said lip part (12) being joined to the body part (11), said body part (11) and said lip part (12) being coaxial, the cone angle (a) of said lip part varying under the action of centrifugal force according to the speed of the rotary shaft, said process comprising, in succession, the steps of halogenation and neutralization, characterized in that said halogenation step is carried out in a water bath containing 0,5 to 10 parts by weight of hypochlorite, 0,5 to 2 parts by weight of hydrochloric acid and 0,5 to 1 part by weight of a surface-active agent, and said neutralization step is carried out in a water bath containing 2,5 to 10 parts by weight of ammonia.

2. A chemical bath process according to claim 1, characterized in that said chemical treatment comprises, upstream of said halogenation step and downstream of said neutralization step respectivley, the further steps of a first and a second washing in water.

3. A chemical bath process according to claim 1, characterized in that said halogenation and neutralization steps are carried out at room temperature and for a period varying from 2 to 10 minutes.

**Patentansprüche**

1. Prozess eines chemischen Bades zur Bahandlung von Dichtungsringen (A) aus natürlichem oder synthetischem elastomerischen Material, wobei die Ringe dazu geeignet sind, auf einer drehbaren Welle montiert zu werden und einen ringförmigen Körper (11) zur Aufnahme der Welle enthalten, sowie einen stumpfkegelförmig ausgebildeten Lippenteil (12), der mit einer festen Dichtfläche (15) zusammenwirkt, und bei dem das kleinere Ende des genannten Lippenteils (12) mit dem Körper (11) verbunden ist und der genannte Körper (11) und der genannte Lippenteil (12) koaxial sind und der Kegelwinkel (α) des genannten Lippenteils sich unter der Wirkung der Zentrifugalkraft je nach der Geschwindigkeit der Welle verändert, und wobei der genannte Prozess aufeinanderfolgend die Phasen der Halogenisierung und der Nautralisierung vorsieht, dadurch gekennzeichnet, dass die genannte Halogenisierungsphase in einem Wasserbad durchgeführt wird, das 0,5 zu 10 Teilen Gewicht Hypochlorit, 0,5 zu 2 Teilen Gewicht Salzsäure und 0,5 zu 1 Teil Gewicht eines oberflächenaktiven Agens enthält und dass die genannte Neutralisierungsphase in einem Waserbad durchgeführt wird, das 2,5 zu 10 Teilen Gewicht Ammoniak enthält.

2. Prozess eines chemischen Bades nach Patentanspruch 1, dadurch gekennzeichnet, dass die genannte chemische Behandlung jeweils vor der ghenannten Halogenisierung und nach der genannten Neutralisierung weitere Phasen einer ersten und einer zweiten Wäsche in Wasser enthält.

3. Prozess eines chemischen Bades nach Patentanspruch 1, dadurch gekennzeichnet, dass die genannten Phasen der Halogenisierung und der Neutralisierung bei Raum-temperatur und für eine Dauer von 2 bis 10 Minuten durchgeführt werden.

**Revendications**

1. Procédé pour le traitement de bagues d'étanchéité (A), en élastomère naturel ou synthétique, dans un bain chimique, lesdites bagues étant destinées à être montées sur un arbre rotatif et comprenant une partie de corps annulaire (11) destinée à recevoir l'arbre et une partie de lèvre (12) de forme tronconique destinée à coopérer avec une surface d'étanchéité fixe (15), l'extrémité la plus petite de ladite partie de lèvre (12) étant unie à la partie de corps (11), les deux parties (11 et 12) étant coaxiales et l'angle conique (α) de la partie de lèvre pouvant varier sous l'action de la force centrifuge selon la vitesse de l'arbre rotatif, ledit procédé comprenant successivement les phases d'halogénation et de neutralization, caractérisé en ce que ladite phase d'halogénation est effectuée dans un bain d'eau contenant 0,5 à 10 partie en poids d'hypochlorite, 0,5 à 2 parties en poids d'acide chlorhydrique et 0,5 à 1 partie en poids d'un agent surfactant, et ladite phase de neutralisation est effectuée dans un bain d'eau contenant 2,5 à 10 parties en poids d'ammoniaque.

2. Procédé de traitement dans un bain chimique selon la revendication 1, caractérisé en ce que ledit traitement chimique comporte, en amont de la phase d'halogénation et en aval de la phase de neutralisation respectivement, une première et une seconde phase additionnelle de lavage dans l'eau.

3. Procédé de traitement dans un bain chimique selon la revendication 1, caractérisé en ce que lesdites phases d'halogénation et de neutralisation sont effectuées à température ambiante et pendant une période comprise entre 2 et 10 minutes.